**Europäisches Patentamt**

**European Patent Office**

**Office européen des brevets**

(11) Numéro de publication: **0 113 260**
**B1**

(12) # FASCICULE DE BREVET EUROPÉEN

(45) Date de publication du fascicule du brevet:
**10.06.87**

(51) Int. Cl.⁴: **B 62 B 3/10**

(21) Numéro de dépôt: **83402197.4**

(22) Date de dépôt: **15.11.83**

(54) **Chariot de transport, notamment pour la clientèle des magasins à libre-service.**

(30) Priorité: **02.12.82 FR 8220184**

(43) Date de publication de la demande:
**11.07.84 Bulletin 84/28**

(45) Mention de la délivrance du brevet:
**10.06.87 Bulletin 87/24**

(84) Etats contractants désignés:
**BE DE GB IT LU NL SE**

(56) Documents cité:
**EP-A-0 051 410**
**DE-A-1 755 991**
**FR-A-2 429 140**
**FR-A-2 488 561**

(73) Titulaire: **ATELIERS REUNIS, 13, rue de la Mairie B.P. No 47, F-67300 Schiltigheim (FR)**

(72) Inventeur: **Levy- Joseph, Marc, 33, Allée de la Robertsau, F-67000 Strasbourg (FR)**

(74) Mandataire: **Tony- Durand, Serge, Cabinet Tony- Durand 22, Boulevard Voltaire, F-75011 Paris (FR)**

## Description

La présente invention est relative aux chariots de transport destinés à être poussés par leurs utilisateurs et manoeuvrés à la main.

Plus précisément elle concerne les chariots mis à la disposition de la clientèle des magasins à libre-service pour transporter les produits et marchandises choisis. Ces chariots sont constitués par une grande corbeille de transport située à une certaine hauteur par rapport à un socle inférieur sur lequel sont fixées les roues, ce socle étant constitué par deux longerons latéraux coudés, en fil métallique, réunis par des traverses horizontales. Une poignée de manoeuvre est généralement prévue à la partie supérieure de l'extrémité arrière de l'ensemble. Un chariot de ce genre est déjà connu dans la technique, en particulier par la demande de brevet européen EP-A-0 051 410.

Dans le but de réduire leur encombrement lorsque ces chariots sont en attente d'utilisation, ceux-ci sont généralement conçus de façon à être emboîtables les uns dans les autres. A cet effet la paroi verticale arrière de la corbeille de transport est constituée par un volet articulé à l'endroit de son bord supérieur de façon à pouvoir être soulevé pour permettre l'engagement de l'extrémité avant de la corbeille d'un autre chariot. Pour sa part le socle inférieur de ces chariots présente également une forme permettant l'emboîtement de plusieurs chariots les uns dans les autres par engagement de chacun d'eux dans l'extémité arrière d'une autre chariot.

Afin de faciliter le déplacement "en bloc" d'une rangée de chariots ainsi emboîtés les uns dans les autres, il a déjà été proposé de munir ceux-ci de moyens aptes à assurer le soulèvement des roues arrière de chaque chariot à l'exception de celles du chariot situé à l'extrémité arrière de l'ensemble. Ces moyens de soulèvement peuvent consister en des rampes et butées, agencées de façon que l'emboîtement d'un chariot, à l'intérieur d'un autre chariot similaire placé devant, provoque automatiquement le soulèvement des roues arrière de celui-ci. Cependant les moyens actuellement prévus à cet effet consistent en des accessoires supplémentaires qui doivent être fabriqués séparément puis montés et fixés en place sur les chariots correspondants, ce qui en augmente sensiblement le prix de revient.

Par ailleurs, dans le but d'empêcher que des marchandises puissent être disposées sur le socle inférieur pour les dissimuler au contrôle effectué à l'endroit des caisses de paiement, il a déjà été proposé d'équiper ces socles d'une rampe inclinée vers l'avant ou de les constituer au moyen de longerons également inclinés vers l'avant. Cependant, là encore les solutions actuellement prévues ne donnent pas pleinement satisfaction.

En effet, l'adjonction d'une rampe sur un socle classique est une cause d'augmentation du prix de revient de l'ensemble. Par ailleurs dans les chariots dont les longerons du socle sont eux-mêmes inclinés vers l'avant, ces derniers sont alors constitués par des tubes métalliques de forte section dans le but de posséder une robustesse suffisante. Cependant ceci présente un certain nombre d'inconvénients. Entre autres, les rayons de pliage des tubes sont plus importants que pour des fils métalliques, ce qui est une gêne pour la fabrication. De plus pour permettre l'emboîtement de ces chariots, il est nécessaire que l'angle formé entre les longerons soit plus important que dans le cas de longerons en fil métallique.

La présente invention a donc pour but de réaliser un chariot conçu pour éviter ces divers inconvénients, tout en réunissant les avantages des deux types de chariots rappelés ci-dessus, à savoir:

- une possibilité d'emboîtement s'accompagnant du soulèvement des roues arrière, et

- une interdiction de mise en place de marchandises sur le socle inférieur.

A cet effet le chariot selon l'invention est essentiellement caractérisé en ce que l'une des traverses du socle est située près du bord arrière du fond de la corbeille de transport, et en ce que le socle comporte, de part et d'autre d'une partie supérieure fixée contre le dessous du fond de la corbeille de transport, une partie avant inclinée selon un angle compris entre 10 et 20 degrés et dont l'extrémité avant coudée vers le bas porte les roues avant, et une partie arrière dirigée vers le bas pour porter les roues arrière. De plus, la partie avant inclinée de ce socle est apte à s'engager sous la corbeille d'un chariot similaire, lors de l'emboîtement de deux chariots l'un dans l'autre vers l'arrière, pour glisser contre la traverse arrière du socle du chariot situé devant de façon à soulever, en fin de mouvement, l'arrière de celui-ci pour écarter ses roues arrière par rapport au sol.

Ainsi les moyens assurant le soulèvement de la partie arrière de chaque chariot sont constitués, non pas par des organes supplémentaires rapportés, mais par des éléments faisant obligatoirement partie de la structure même du chariot, à savoir:

- d'une part la partie avant inclinée des longerons du socle,

- d'autre part la traverse prévue à la partie supérieure de ces longerons, près de l'extrémité arrière de la corbeille supérieure de transport.

Ceci est donc un avantage évident de ce chariot. Un autre avantage de celui-ci réside dans le fait que son socle est constitué en fils métalliques et non pas en tube, bien que ses longerons soient inclinés vers l'avant.

Selon une autre caractéristique du présent chariot, une autre traverse en fils métalliques est disposée entre les deux longerons du socle dans la partie supérieure de ceux-ci, mais nettement en avant de la traverse arrière, cette traverse avant étant agencée pour constituer en plus une butée limitant l'emboîtement des chariots les une à l'intérieur des autres.

Cependant, d'autres particularités et avantages du chariot selon l'invention apparaîtront au cours de la description suivante d'un exemple de réalisation de celui-ci. Cette description est donnée en référence au dessin annexé à simple titre indicatif, et sur lequel:

- La figure 1 est une vue en perspective d'un chariot selon l'invention.

- La figure 2 en est une vue en coupe verticale selon un plan transversal passant par la ligne II-II de la figure 1.

- La figure 3 est une vue partielle en élévation de côté représentant deux chariots selon l'invention au début de leur emboîtement l'un à l'intérieur de l'autre.

- La figure 4 est une vue similaire représentant ces mêmes chariots après achèvement de leur emboîtement.

De façon connue le chariot selon l'invention comporte une corbeille de transport 1 dont le fond est situé nettement au-dessus du sol, par exemple à une hauteur comprise entre 35 et 45 cm. Cette corbeille est supportée par un socle monté sur quatre roues, à savoir:

deux roues orientables 2 à l'avant et deux roues non orientables 3 à l'arrière. Pour permettre l'emboîtement d'un autre chariot, la paroi arrière est constituée par un volet 4, également en fil métallique, monté pivotant à son extrémité supérieure, autour d'un axe 5. Eventuellement, ce volet, peut, de façon connue, porter d'autres éléments particulés lui permettant de servir de porte-bébés, comme cela est le cas dans l'exemple représenté.

Conformément à la caractéristique essentielle de l'objet de l'invention, le socle inférieur est constitué par deux longerons, formés chacun par deux fils métalliques parallèles 6. Ceux-ci sont coudés de façon à comporter trois parties distinctes, en plus de leurs extrémités 7 qui s'étendent verticalement pour permettre la fixation des dispositifs de montage des roues correspondantes. Les trois parties distinctes ainsi prévues sont respectivement:

- une partie avant 6a inclinée vers l'avant,
- une partie arrière 6b inclinée vers l'arrière,
- et une partie intermediaire 6c fixée contre le fond de la corbeille 1.

La partie avant 6a des deux longerons s'étend sous une longueur importante de la corbeille 1. Ainsi, si les roues avant sont situées sous l'extrémité avant de cette corbeille, 12 partie avant de ces longerons peut s'étendre sous environ les 2/3 de la longueur totale de la corbeille 1.

Quant à la partie intermédiaire 6c, elle s'étend sous le reste de cette longueur soit 1/3, dans l'exemple envisagé ci-dessus. Enfin, la partie arrière 6b s'étend au-delà de l'extrémité arrière de cette corbeille.

Du fait de la présence de la partie coudée 7 s'étendant à la verticale sur une certaine longueur au-dessus de l'emplacement des roues avant 2, l'extrémité avant de la partie inclinée 6a des longerons se trouve située à une hauteur H qui est relativement importante, par exemple de l'ordre de 20 cm à 25 cm. Dans ces conditions l'angle d'inclinaison $\alpha$ de cette partie inclinée 6a du longeron est relativement faible, par exemple, d'une valeur comprise entre 10 et 20° et ce, tout en conservant pour le fond de la corbeille 1 son niveau habituel, c'est-à-dire une hauteur d'environ 35 à 45 cm par rapport au sol. Une telle inclinaison est amplement suffisante pour empêcher la mise en place de marchandises sur le dessus du socle. Cependant elle est par ailleurs avantugeuse pour le soulèvement de l'extrémité arrière des chariots lors de leur emboîtement, ainsi qu'il sera décrit par la suite.

Dans la partie avant 6a des longerons ainsi que dans la partie intermédiaire 6c, l'écartement entre les deux fils métalliques, constituant chaque longeron est égal à l'épaisseur des fils métalliques utilisés pour servir d'entretoises entre ces longerons. Ainsi les extrémités de ces entretoises peuvent être soudées entre les deux fils correspondants.

Dans l'exemple représenté il est prévu trois entretoises à savoir:
- une entretoise avant 8,
- une entretoise intermédiaire 9
- une entretoise arrière 10.

L'entretoise avant 8 est située à l'extrémité avant de la partie inclinée 6a des longerons. Quant à l'entretoise arrière 10, elle est disposée à proximité de l'extrémité arrière de la corbeille 1. Ces deux entretoises sont constituées par des fils métalliques rectilignes.

Quant à l'entretoise intermédiaire 9 elle est disposée à quelque distance en avant du coude 11 séparant la partie avant inclinée 6a des longerons et la partie intermédiaire 6c de ceux-ci. Dans ces conditions, cette entretoise se trouve disposée à un endroit où le fond de la corbeille n'est pas en contact avec les longerons du socle. Cependant, comme cette entretoise est destinée, entre autres à servir de support supplémentaire au fond de la corbeille, elle est soudée contre la face inférieure de celle-ci et ses extrémités sont coudées vers le bas, puis à l'horizontale, de matière à être soudre entre les fils des longerons dans leur partie 6a. Cependant, ainsi qu'il sera expliqué par la suite cette entretoise 9 a pour seconde fonction de servir de butée limitant l'emboîtement des chariots les une à l'intérieur des autres.

Pour sa part l'entretoise arrière 10 est susceptible de servir d'élément d'appui pour la partie avant inclinée 6a d un chariot emboîté par l'arrière, afin de permettre le soulèvement de l'extrémité arrière du chariot auquel appartient cette entretoise. En effet, la partie avant 6a des longerons de chaque chariot est destinée à servir de rampe de soulèvement lors de l'emboîtement de deux châriots A et B l'un à l'intérieur de l'autre.

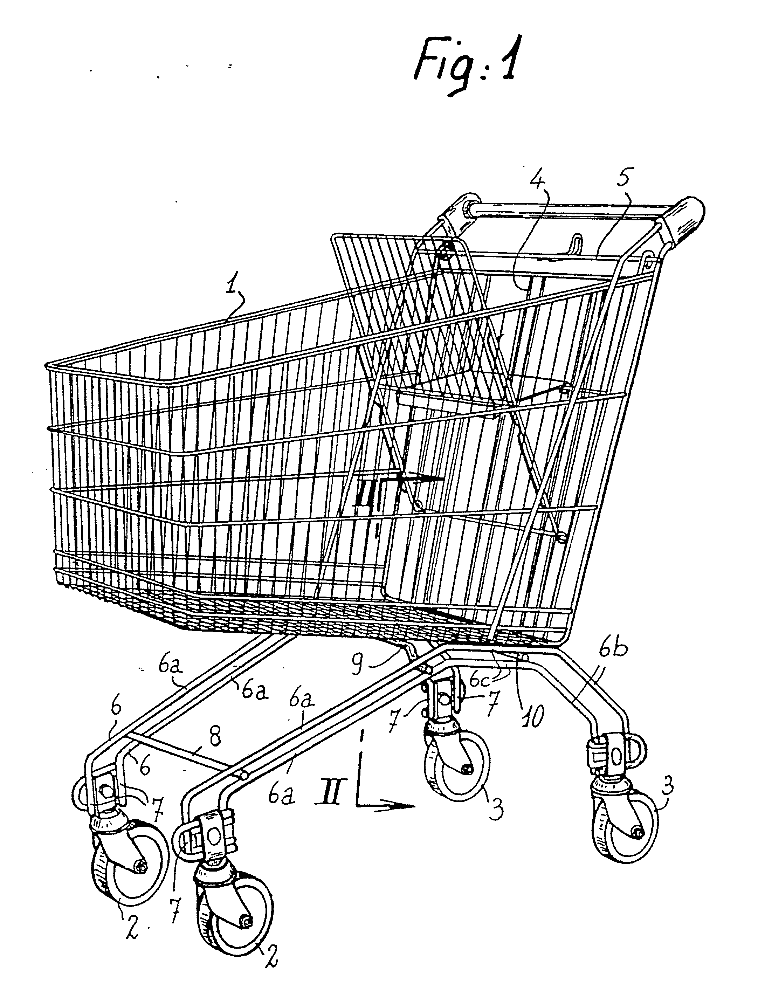

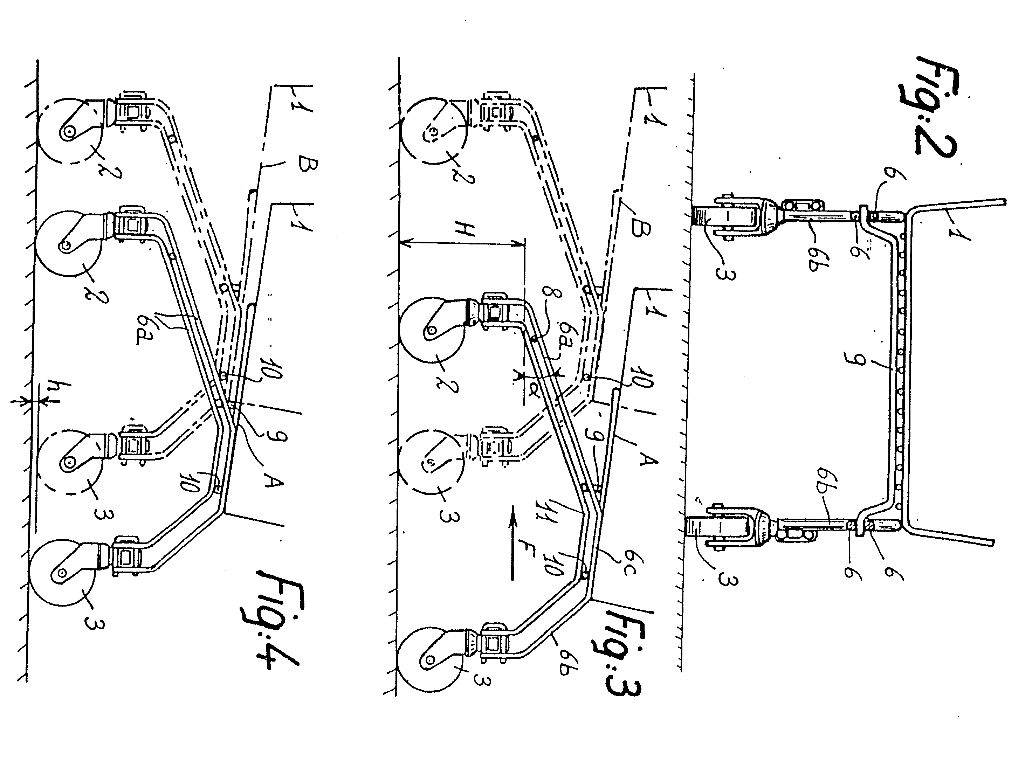

Comme représenté sur la figure 3, cet emboîtement est réalisé en engageant l'extrémité avant de la corbeille de transport 1 du chariot arrière A à l'intérieur de la partie arrière de celle du chariot avant B. La partie inclinée 6a des longerons du socle du chariot arrière A se trouve alors disposée sous l'entretoise arrière 10 du socle du chariot avant B.

En poursuivant le mouvement d'emboîtement du chariot arrière a selon la flèche F, la partie avant inclinée 6a des longerons de ce chariot vient au contact de l'entretoise 10 du chariot avant B, ce qui en fin de mouvement, provoque le soulèvement des roues arrière du chariot avant par rapport au sol, d'une hauteur h (voir figure 4). Cependant les roues avant 2 du chariot avant restent au contact du sol. Pour obtenir ce résultat il convient que l'entretoise 10 soit située en arrière du centre de gravité de chaque chariot.

Il faut observer que l'entretoise intermédiaire 9 du socle du chariot arrière constitue alors une butée limitant l'emboîtement de ce chariot à l'intérieur du chariot B. En effet, en fin de mouvement, cette entretoise vient buter contre l'extrémité arrière de la corbeille de transport 1 du chariot avant B, ainsi qu'il anparaît sur la figure 4.

Ceci évite tout risque de coincement des chariots les uns à l'intérieur des autres.

Lorsqu'une série de chariots en attente sont emboîtés les uns à l'intérieur des autres, les roues arrière 3 de la totalité de ceux-ci se trouvent soulevées par rapport au sol, sauf les roues arrière du chariot situé à l'arrière de la rangée ainsi constituée. Ceci permet de déplacer aisément, d'un seul tenant, l'ensemble de ces chariots en manoeuvrant seulement le chariot situé à l'arrière. Cette facilité de manoeuvre est tout particulièrement avantageuse dans le cas de chariots dont les roues arrière ne sont pas orientables. Cependant elle est également avantageuse dans le cas de chariots équipés de roues orientables à la fois à l'arrière et à l'avant.

Or, ce soulèvement automatique de l'arrière des chariots, lors de leur emboîtement, est obtenu sans organes supplementaires destinés à assurer un tel soulèvement. En effet, c'est la partie avant 6a des longerons du socle de chaque chariot qui joue le rôle de rampe de soulèvement en agissant sur l'entretoise arrière 10 du chariot situé immédiatement devant. Il s'agit donc là d'un avantage, tant en ce qui concerne le prix de revient du chariot, que sa robustesse.

Cependant, la partie avant inclinée des longerons du socle a également pour rôle d'éviter que les utilisateurs puissent placer des marchandises sur le dessus du socle d'un chariot afin d'essayer de les dissimuler lors de contrôle effectué à l'endroit des caisses de paiement. Enfin, il convient de noter que la constitution des longerons du socle du présent chariot au moyen de deux fils métalliques superposés comporte des avantages importants par rapport à la fabrication de ces longerons au moyen d'un tube métallique unique de plus forte section. Ces avantages résident dans la simplicité de la fabrication du socle ainsi constitué et dans le fait que la partie avant inclinée des longerons peut ainsi aisément constituer une rampe de soulèvement susceptible d'agir sur la traverse arrière d'un autre chariot, lors de l'emboîtement de ces chariots.

**Revendications**

1 - Chariot de transport, notamment pour la clientèle des magasins à libre-service, comportant une corbeille (1) de transport de marchandises supportée par un socle (6) inférieur et située à une certaine hauteur par rapport aux roues (2, 3), le socle étant constitué par deux longerons latéraux coudés, en fil métallique, réunis par des traverses horizontales, caractérisé en ce que l'une des traverses (10) est située près du bord arrière du fond de la corbeille de transport et en ce que le socle comporte de part et d'autre d'une partie supérieure (6c) fixée contre le dessous du fond de la corbeille de transport (1), une partie avant (6a) inclinée selon un angle compris entre 10 et 20° et dont l'extrémité avant coudée vers le bas porte les roues avant (2), et une partie arrière (6b) dirigée vers le bas pour porter les roues arrière (3), la partie avant inclinée (6a) étant apte à s'engager sous la corbeille d'un chariot similaire lors de l'emboîtement de deux chariots l'un dans l'autre par l'arrière pour glisser contre la traverse arrière (10) du socle du chariot situé devant de façon à soulever, en fin de mouvement, l'arrière de celui-ci pour écarter ses roues arrière par rapport au sol.

2 - Chariot de transport selon la revendication 1, caractérisé en ce qu'en avant du coude (11), séparant la partie avant inclinée (6a) des longerons et leur partie intermédiaire (6c), il est prévu une traverse (9) fixée contre le fond de la corbeille de transport (1) et dont les extrémités sont coudées vers le bas pour être fixées sur les longerons du socle, cette traverse étant apte à servir de butée pour limiter l'emboîtement du présent chariot à l'intérieur d'un chariot identique situé devant.

3 - Chariot de transport selon l'une des revendications précédentes, caractérisé en ce que les longerons du socle sont constitués par deux fils métalliques (6), parallèles et superposés, dont l'écart, dans leur partie avant inclinée (6a) et dans leur partie intermédiaire haute (6c), correspond au diamètre des entretoises de liaison (8, 9, 10), les extrémités de celles-ci étant engagées entre ces deux fils et soudées sur ceux-ci.

**Patentansprüche**

1. Transportwagen insbesondere für die Kundschaft von Selbstbedienungsläden mit einem auf einen Untergestell (6) in einer gewissen Höhe über den Rädern (2, 3) angeordneten Warentransportkorb (1), wobei das Untergestell (6) aus zwei, seitlichen, gebogenen Längsträgern aus Metalldraht gebildet ist, welche durch horizontale Querträger verbunden sind, dadurch gekennzeichnet, daß einer der Querträger (10) nahe des Hinterrandes des Bodens des Transportkorbes angeordnet ist, und daß das Untergestell ein an der Unterseite des Bodens des Transportkorbes (1) befestigtes Oberteil (6c), ein um einen Winkel von etwa 10° - 20° geneigtes Vorderteil (6a) dessen Enden nach unten abgebogen sind und die Vorderräder (2) tragen, sowie ein nach unten gerichtetes die Hinterräder (3) tragendes Hinterteil (6b) aufweist, wobei das geneigte Vorderteil (6a) derart ausgebildet ist, daß es beim Ineinanderschieben zweier gleichartiger Wagen von hinten her unter dem Querträger (10) am Untergestell des vorderen Wagens entlang gleitet und dessen Hinterteil anhebt, so daß am Ende der Bewegung dessen Hinterräder vom Boden abgehoben sind.

2. Transportwagen nach Anspruch 1, dadurch gekennzeichnet, daß das vor dem Knick (11), welcher das geneigte Vorderteil (6a) vom Mittelteil (6c) trennt, ein Querträger (9) vorgesehen ist, der am Boden des Transportkorbes befestigt ist und dessen Enden nach unten gebogen und an den Längsträgern des Untergestells befestigt sind und als anschlag dient, um das Ineinanderschieben gleichartiger Wagen zu begrenzen.

3. Transportwagen nach einem der vorausgehenden Ansprüche, dadurch gekennzeichneten, daß die Längsträger des Untergestells aus zwei parallel, übereinander angeordneten Metalldrähten (6) gebildet sind, deren Abstand im geneigten Vorderteil (6a) und im Mitteilteil (6c) dem Durchmesser der Verbindungsstreben (8, 9, 10) entspricht, deren Enden zwischen die beiden Drähte greifen und mit diesen verschweißt sind.

**Claims**

1. Carrier trolley, especially for customers of self-service stores, comprising a merchandise carrier basket (1) supported by a base frame (6) and located at a certain height with respect to the wheels (2, 3), the base frame being constituted by two elbowed side members of wire joined together by horizontal cross-members, characterized in that one of the cross-members (10) is located near the rear edge of the bottom of the carrier basket and that the base frame is provided on each side of a top portion (6c) which is fixed against the underside of the bottom of the carrier basket (1) with a sloping front portion (6a) which is inclined at an angle within the range of 10 to 20° and the downwardly elbowed front end of which carries the front wheels (2), and with a downwardly directed rear portion (6b) for carrying the rear wheels (3), the sloping front portion (6a) being capable of engaging beneath the carrier basket of a similar trolley at the time of engagement of two trolleys one within the rear end of the other in order to slide against the rear cross-member (10) of the base frame of the trolley located in front in such a manner as to lift the rear end of this latter at the end of the movement in order to lift its rear wheels with respect to the ground.

2. Carrier trolley in accordance with claim 1, characterized in that, in front of the elbow (11) located between the sloping front portion (6a) of the side members and their intermediate portion (6c), provision is made for a cross-member (9) which is fixed against the bottom of the carrier basket (1) and the ends of which are downwardly elbowed in order to be fixed on the side members of the base frame, this cross-member being capable of serving as a stop for limiting the extent of engagement of the present trolley into an identical trolley located in front.

3. Carrier trolley in accordance with any one of the preceding claims, characterized in that the side members of the base frame are formed by two parallel and superposed wires (6) relatively spaced in their sloping front portion (6a) and in their top intermediate portion (6c) at a distance which corresponds to the diameter of the connecting cross-members (8, 9, 10), the ends of these latter being engaged between these two wires and welded to these latter.

Fig:1

0 113 260

Fig:2

Fig:3

Fig:4

3